(19) Europäisches Patentamt
European Patent Office
Office européen des brevets

(11) **EP 1 295 252 B1**

(12) **EUROPEAN PATENT SPECIFICATION**

(45) Date of publication and mention
of the grant of the patent:
**27.12.2006 Bulletin 2006/52**

(51) Int Cl.:
***G06N 3/04*** *(2006.01)*

(21) Application number: **01943672.4**

(86) International application number:
**PCT/GB2001/002903**

(22) Date of filing: **28.06.2001**

(87) International publication number:
**WO 2002/003324 (10.01.2002 Gazette 2002/02)**

(54) **APPARATUS FOR GENERATING SEQUENCES OF ELEMENTS**

ANORDNUNG ZUR GENERIERUNG VON ELEMENTENSEQUENZEN

APPAREIL POUR GENERER DES SEQUENCES D'ELEMENTS

(84) Designated Contracting States:
**DE FR GB**

(30) Priority: **30.06.2000 EP 00305512**

(43) Date of publication of application:
**26.03.2003 Bulletin 2003/13**

(73) Proprietor: **BRITISH TELECOMMUNICATIONS public limited company**
**London EC1A 7AJ (GB)**

(72) Inventors:
• **TSUI, Kwok Ching**
**Hung Hom,**
**Kowloon,**
**Hong Kong (CN)**
• **AZVINE, Behnam**
**Ipswich,**
**Suffolk IP5 2GT (GB)**
• **DJIAN, David Philippe**
**06600 Antibes (FR)**
• **AZARMI, Nader**
**Colchester,**
**Essex CO3 3SE (GB)**
• **TAYLOR, Neill**
**Colliers Wood,**
**London SW19 2AX (GB)**
• **TAYLOR, John Gerald**
**Barnes,**
**London SW13 0DS (GB)**

(74) Representative: **Lidbetter, Timothy Guy Edwin**
**BT Group Legal**
**Intellectual Property Department**
**PP C5A**
**BT Centre**
**81 Newgate Street**
**London EC1A 7AJ (GB)**

(56) References cited:
**US-A- 5 434 783**

• **SHENG C ET AL: "TEMPORAL ASSOCIATIVE MEMORY WITH FINITE INTERNAL STATES" PROCEEDINGS OF THE INTERNATIONAL CONFERENCE ON NEURAL NETWORKS (ICNN), US, NEW YORK, IEEE, 27 June 1994 (1994-06-27), pages 1109-1114, XP000532179 ISBN: 0-7803-1902-8**
• **YE-YI WANG ET AL: "A CONNECTIONIST MODEL FOR DIALOG PROCESSING" INTERNATIONAL CONFERENCE ON ACOUSTICS, SPEECH & SIGNAL PROCESSING. ICASSP, US, NEW YORK, IEEE, vol. CONF. 16, 14 May 1991 (1991-05-14), pages 785-788, XP000222246 ISBN: 0-7803-0003-3**
• **SUNG JOO PARK ET AL: "A HIERARCHICAL NEURAL NETWORK APPROACH TO INTELLIGENT TRAFFIC CONTROL" PROCEEDINGS OF THE INTERNATIONAL CONFERENCE ON NEURAL NETWORKS (ICNN), US, NEW YORK, IEEE, 27 June 1994 (1994-06-27), pages 3358-3362, XP000532726 ISBN: 0-7803-1902-8**

- **AMIT D J ET AL: "ARCHITECTURE OF ATTRACTOR NEURAL NETWORKS PERFORMING COGNITIVE FAST SCANNING" NETWORK: COMPUTATION IN NEURAL SYSTEMS, GB, IOP PUBLISHING, BRISTOL, vol. 1, no. 2, 1 April 1990 (1990-04-01), pages 189-216, XP000134773 ISSN: 0954-898X**

**Description**

The present invention relates to apparatus for generating sequences of elements, and is suitable particularly but not exclusively for generating sequences of elements, such as numbers or task names.

Machine learning systems are, among other things, applied as a mechanism for learning information that can then be applied to efficiently automate and control various processes. Neural network systems, in particular, provide a means of extrapolating from learnt information in order to provide a solution to problems that are inherently insolvable by rule-based systems. Neural networks have wide applicability, in areas such as financial engineering, providing, for example, equity predictions, market forecasting, bond rate prediction and corporate mergers predictions (Trippi, R., and E. Turban, (eds) Neural Networks in Finance and Investing, Irwin/Probus Publishing, 1993). Other uses for machine learning techniques include data classification, which can be applied to design a fault detection system (e.g. for pipes), or an automatic grading system (e.g. for produce such as apples). Yet further uses include robotic systems, which may be described as complex dynamical systems having many degrees of freedom, and are operable to perform series of movements, actions or processes. In the latter application, controlling parameters may be learnt and applied in order to achieve an appropriate scheduling of actions.

Neural networks are networks of many simple processors ("nodes"). The nodes are connected by communication channels ("links"), which usually carry numeric data, encoded by any of various means. The nodes operate only on their local data and on the inputs they receive via the links. Most neural networks have some sort of "training" rule whereby the weights of links are adjusted on the basis of data, thus neural networks "learn" from examples (as children learn to recognize dogs from examples of dogs) and exhibit some capability for generalisation beyond the training data. According to Haykin, S. (1994), Neural Networks: A Comprehensive Foundation, NY: Macmillan, p. 2:

*"A neural network is a massively parallel distributed processor that has a natural propensity for storing experiential knowledge and making it available for use. It resembles the brain in two respects:*

*1. Knowledge is acquired by the network through a learning process;*
*2. Inter-neuron connection strengths, known as synaptic weights, are used to store the knowledge.*

Neural network systems that are used for learning sequences to create planning solutions and schedule systems, or user tasks, embed a process known as Temporal Sequence Storage and Generation (TSSG) into the system to create a schedule of tasks. TSSG is based on observations of sequence retention by biological systems. There is a certain class of neural networks that is ideally suited to model TSSG, as they can be trained using inductive learning algorithms. Current neural networks that achieve TSSG include time-delay nets[i], which implement Hakens embedding theorem, and various recurrent models, such as the spin-glas[ii]; nets with context neurones[iii]; the Elman net[iv] and extensions thereof[v]; and the crumbling history approach[vi]. However, the spin-glass is limited to reproducing short sequences, the Elman net uses associative chaining to generate sequences, which is computationally expensive, and the crumbling history approach cannot plan successfully using learnt sequences. In all of these cases, the ability of the neural networks to be integrated usefully into systems that perform complex scheduling tasks such as work pattern management is limited.

Journal publication "Temporal associative memory with finite internal states", Chengke Sheng and Yu-Cheng Liu, IEEE, New York, 27th June 1994 pp. 1109 - 1114 discloses a Finite State Network (FSN), which associates a temporal input pattern with a temporal output pattern. The FSN comprises three layers: an input layer, an output layer and a state layer, the layers being arranged such that for each

State ($S_i$) there is a corresponding element ($L_i$) of the temporal input pattern and element ($D_i$) of the output pattern associated therewith. Essentially a trained FSN can be represented as a tree, each level representing a different state ($S_i$) and a different element in the temporal pattern, so that the number of levels in the tree is dependent on the number of elements in the input pattern. The paper describes a particular example where the FSN is trained on string pairs (input: OOD, output: OPQ). The trained FSN comprises a tree having three levels, where at least one of the paths therein follows [input/output] O/O; O/P; D/Q, so that for each element of the temporal input sequence an output element is generated. Once the FSN has traced a path through the tree, the outputs are collated together to produce the output string OPQ.

According to a first aspect of the invention, there is provided neural network apparatus comprising the features defined in claim 1 of the appended set of claims.

Preferably the identifying means (i) comprises a plurality of classifying units, each of which classifying units comprises a plurality of first classifying nodes; a plurality of second classifying nodes, and a plurality of classifying links. Each of the classifying links connects one of the first classifying nodes with one second classifying node and has a classifying weight associated with it. Each of the classifying units is operable to learn one or more sequences of elements by modifying the classifying weights on the classifying links.

Preferably the sequence generator for generating sequences of elements (ii) includes one or more task units, each task unit comprising an upper and a lower neural network connected in a hierarchical relationship and being connected to each of the other task units by means of sequence generator weighted connections therebetween.

According to a further aspect of the present invention, there is provided a method of training an apparatus to generate a predetermined second one or more comprising the features defined in claim 10 of the appended set of claims.

Further aspects, features and advantages of the apparatus for generating sequences of elements will now be described, by way of example only as an embodiment of the present invention, and with reference to the accompanying drawings, in which:

Figure 1 is a schematic block diagram of the hardware of a computer system configured to run a sequence generator of the present invention;

Figure 2 is a schematic diagram showing the sequence generator interacting with a plurality of intelligent agents according to the present invention;

Figure 3 is a schematic representation of apparatus for generating sequences of elements according to an embodiment of the present invention;

Figure 4 is a schematic representation of a recurrent neural network known as the ACTION network for use in the apparatus of Figure 3;

Figure 5 is a schematic representation of a task unit comprising an upper and a lower ACTION network of Figure 4 arranged in a hierarchical relationship;

Figure 6 is a schematic representation of two task units of Figure 5, each comprising one upper and three lower ACTION networks of Figure 4 arranged in a hierarchical relationship;

Figure 7 is a schematic representation of two task units of Figure 5 interconnected by a variable weight link;

Figure 8a is a schematic representation of identifying means comprising part of the apparatus of Figure 3;

Figure 8b is a schematic representation of layers of a Kohonen Self-Organising Map unit (SOM) comprising part of the identifying means shown in Figure 8a;

Figure 8c is a list of permutations of elements that comprise an input training set to the SOM of Figure 8b;

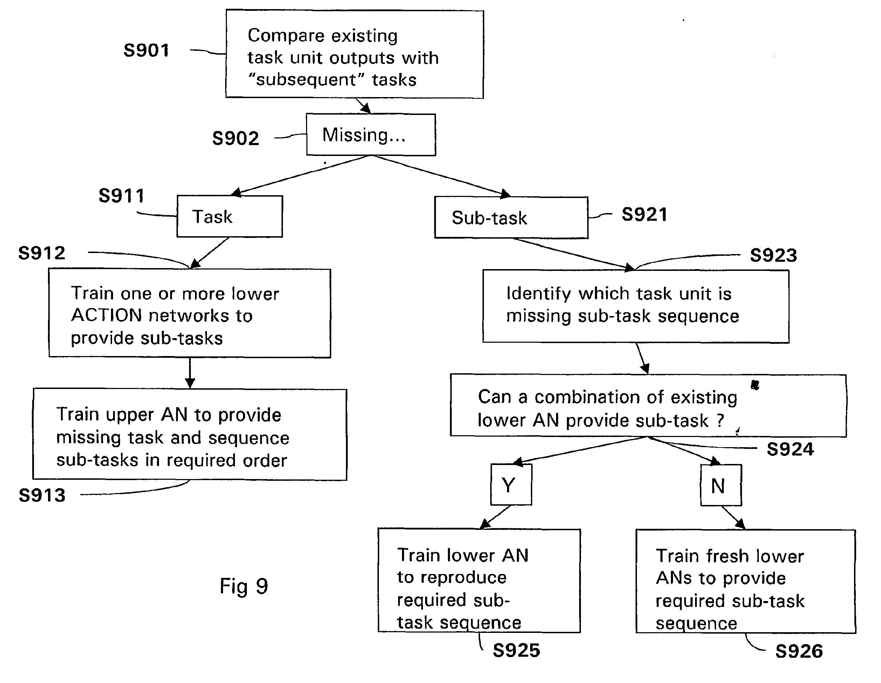

Figure 9 is a schematic block diagram showing training steps for use in the apparatus of Figure 3;

Figure 10 is a schematic block diagram showing operational steps for the apparatus of Figure 3.

In the following description, the terms "layer", "node", "activity", "weight", "inhibitory weight", "excitatory weight" and "weight initialisation" are used. These are defined as follows:

A "layer": a data store such as an array, or a matrix, of elements, which elements are the nodes described below;

A "node": an array element which receives inputs from, and provides outputs to, other array elements within the same layer or elements within different layers;

"Activity": values in the array elements computed from input functions from and output functions to connected layers;

"Weight": a multiplier which is applied to the input and output functions, and which controls the amount of activity input to or output from each node;

"Inhibitory weight": a multiplier having a value less than 0;

"Excitatory weight": a multiplier having a value greater than 0;

"Weight initialisation": the sequences generated by the present invention are controlled by the configuration of the layers, the functions between connected layers, and the weights. The means of generating a sequence of elements includes a computational process, and the various parameters in the controlling equations require suitable initialising. Thus weight initialisation refers to the initial configuration of the weights;

"Task": a category of work, such as email, report, meeting etc.

"Sub-task": components that comprise a task, so for a task of email, a sub-task may be open email, read email, reply to email, archive email etc.

General Overview of Operational Layer

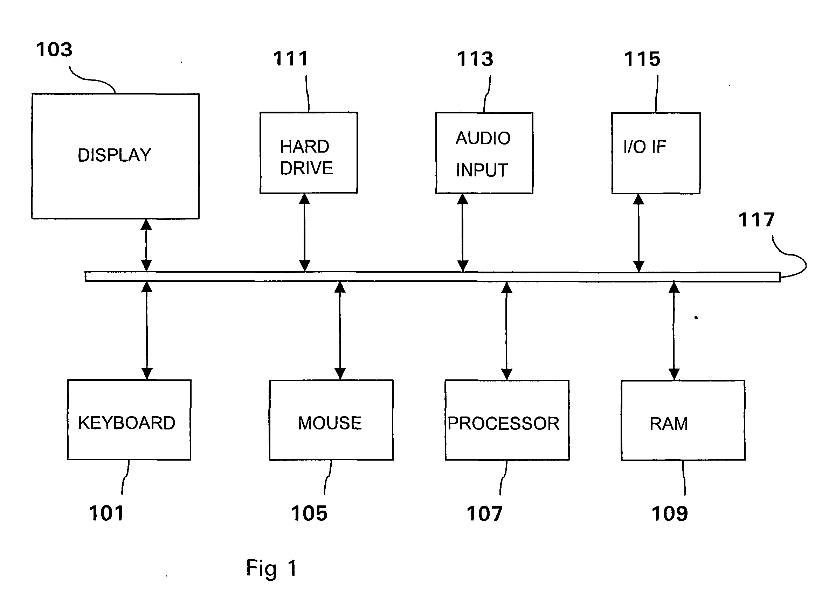

Referring to Figure 1, an environment for effecting the present invention comprises a generally conventional computer system 100 that comprises: a conventional keyboard 101; a display screen 103, such as a CRT or plasma screen; a mouse 105; a processor 107 such as a Pentium™ processor; random access memory 109; a hard disc drive 111; an audio input 113 such as a microphone to detect utterances from the user; and input/output interfaces 11 5 to connect the workstation to a local area network (LAN), wider area networks (WAN) and/or the internet, to facilitate data exchange including e-mail messaging with remote users connected to such networks. The interface 115 also allows control of a plain old telephone set (POTS) and the components shown in Figure 1 are interconnected by a common bus 117. In addition to the single system configuration shown in Figure 1, several computer systems (not shown) may be interconnected over a local area network via the input/output interface 115.

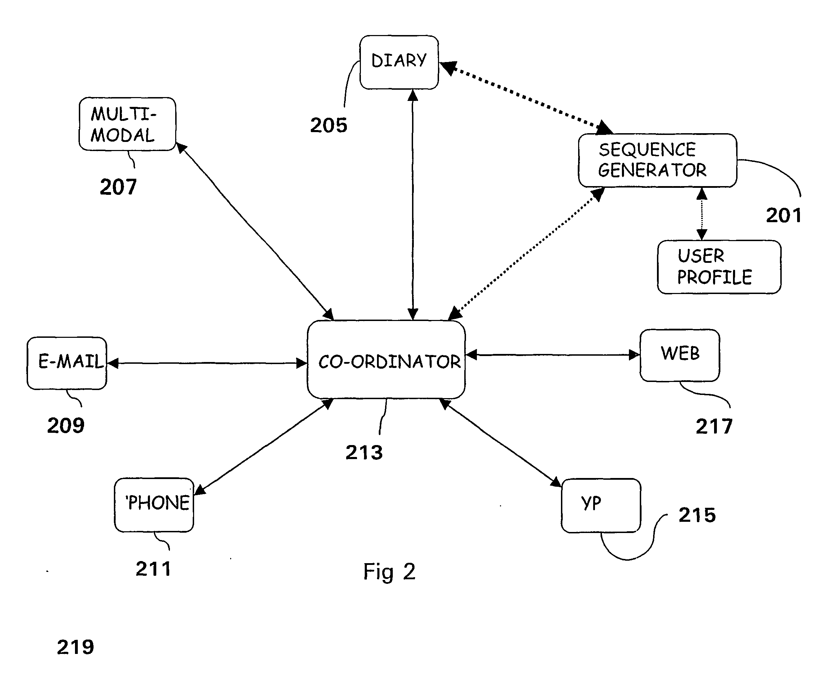

Referring also to Figure 2, apparatus 201 for generating sequences of elements to be executed by a computer system, referred to generally as a sequence generator, may be stored on the hard disc drive 111 for processing by the processor 107. In the embodiment described herein, the sequence generator 201 may be part of an intelligent assistant (IA) system 219, which enables users to devote their time to highly complex tasks while the system 219 takes some decisions on behalf of the user based on previous observations of the user or stored user preferences. It does this by generating a sequence of elements, which are tasks to be carried out by the IA system 219 for the user. Typical tasks to be performed by the system include time, information and communication management. When the computer system comprises several computer workstations, several intelligent assistant systems 219 may be active and may communicate with one another.

As shown in Figure 2, such an IA system 219 may additionally comprise a set of autonomous systems 205, 207, 209, 211, 213, 215, 217 generally referred to as agents, specialising in various tasks such as diary management, telephone call filtering and e-mail prioritisation, web search, telephone directory enquiry, multimodal interface and communication flow management. Each agent has its own interface and interacts with the user in its own particular way, and the agents communicate with one another by message passing. These agents comprise reactive, collaborative, deliberative and proactive agents that respond to events in the user's environment (such as e-mails and telephone calls) by initiating interactions with the user. The sequence generator 201 may interact with the diary assistant 205, organising a pool of tasks, which may be a user's tasks for a day, and generating a sequence order for the tasks based on knowledge of the user's preferred work patterns and of what tasks the user has recently completed. This information may be available as a user profile 203, and may additionally include information relating to preferences as a function of time of day and availability of the user with inputs from the agents comprising the intelligent assistant system 219. The sequence generator 201, when integrated into the intelligent assistant system 219, may also and/or alternatively be used to organise inter-agent tasks such that it 201 dynamically directs a preferred order of agent tasks based on learnt agent capabilities. Thus the elements sequenced by the sequence generator 201 may include work tasks and sub-tasks for a range of entities, such as a user, a piece of equipment or a business. In the following description, work tasks and sub-tasks of a user are described as examples of elements that comprise sequences generated by embodiments of the present invention.

A sequence generator according to an embodiment of the present invention 201 provides infrastructure management of tasks to be performed by an entity, based on learnt context-based task ordering. Within the framework of the present invention, context-based means taking account of the tasks that were carried out before the tasks that comprise the current plan as well as taking account of current inter-task preferences. When the tasks are machine-processable events, such as kernel events, or inter-agent transfer of information, the order in which a series of tasks comprising, for example, system calls to be processed is likely to depend on which tasks have been completed before. When the tasks are user-based, the selection of tasks to be performed next is similarly likely to be determined, at least in part, by which tasks were performed before. In this latter scenario an embodiment of the present invention is accounting for, among other things, the context of the user after having completed those previous tasks. The sequence generator therefore receives as input the tasks previously completed, and outputs a sequence, in a preferred order, of tasks that would best suit the user's present context. This output is preferably realised by a neural network system that has been trained on previously observed context-based behaviour patterns, as described below.

*Embodiment: Sequence generator for generating context-based sequences of elements*

Overview of sequence generator 201

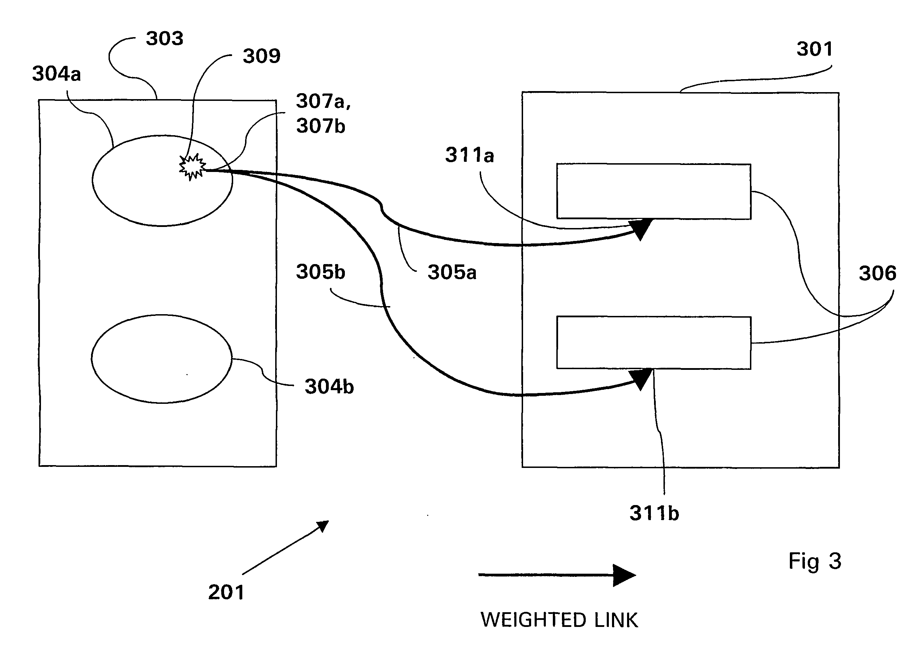

As shown in Figure 3, the sequence generator 201 for generating context-based sequences of elements has two parts, an identifying part 303 and a neural network part 301. The sequence generator 201 may receive, as input, tasks that a user has already completed. The identifying part 303 of the sequence generator 201 matches these input tasks to a known set of tasks. It then outputs a value, which is representative of a best match to that known set of tasks (or a default value if a best match could not be found), to the neural network part 301 and the neural network 301 generates a subsequent task sequence based on the "best match" value that it receives. As described below, the identifying part 303 may comprise a classifier, such as a Self-Organising Map (SOM) system 304, and connecting means 305a, 305b, which are described below, may connect the value output from the SOM system 304 to the neural network part 301.

In use of such a system, the user may for instance carry out some tasks, which the diary assistant 205 monitors. The diary assistant 205 inputs this set of tasks to the SOM system 304, which, having access to stored sequences of previously observed tasks, operates to find a best match between the stored sequences of tasks and the received input sequence of tasks. The SOM system 304 identifies this best match by means of an output signal, and the output signal is transmitted to the neural network system 301. Once the neural network 301 has received an input signal from the SOM system 304, the neural network 301 outputs a sequence of tasks, as described in detail below.

As shown in Figure 3, the SOM system 304 comprises a plurality of individual self-organising map units 304a, 304b, each of which has access to (different) stored sequences. The best match between the received sequence and stored sequences is therefore identified by one of the self-organising map units 304a, 304b, and the output signal described above is thus a signal emanating from the unit that has identified the best match. This output is then connected to each of the task units 306, which, as shown in Figure 3 as unit 304a, is via more links 305a, 305b.

The sequence generator 201 provides increased functionality over the neural network system 301 on its own, which only reproduces sequences that it has learnt in isolation, i.e. for an input of, say, 1, the neural network system 301 outputs a pre-learnt sequence of numbers. In contrast, the sequence generator 201 effectively replaces the "1" input with an input that is representative of what has been done before, as provided by output from the SOM system 304. Hence if a user had performed tasks 1 to 3 of a series of tasks, to get a subsequent task sequence from the neural network system 301 on its own, the input to the neural network system 301 would logically be "3" and the system would generate a task sequence that it has previously learned for "3", for instance "4,5,6". For the sequence generator 201 however, the input would be "1,2,3" or perhaps "2,1,3" or there may be an unknown task in the set such as "1,a, 3". The SOM system 304 of the sequence generator 201 may respond differently to each of those inputs and thus produce a different "best match" for each of the sequences. In turn, the neural network system 301 may generate a different subsequent task sequence in response. Hence the sequence generator 201 for generating context-based sequences has a significantly more complex set of behaviours available than a system generating sequences in isolation 301.

In terms of the IA system 219, this represents a more useful tool - the IA system 219 is (partly) concerned with automating processes for a user so that the user can concentrate on "higher level" tasks. So, for example, if the user returns to his office having already completed tasks A, B, C, what will he want to do next? The sequence generator 201 will take input from whichever of the self-organising map units 304a, 304b most closely corresponds to tasks A, B, C and will feed that into the neural network system 301. By comparison, the neural network system 301 alone would generate an order for subsequent tasks based on a preferred order when these tasks are performed in isolation.

The present invention undergoes a training phase before it may be used as a system to output context-based sequences of elements. The following description first discloses an embodiment of the configuration of the sequence generator and then discloses the steps involved in training and operating the sequence generator.

Description of Neural Network System 301

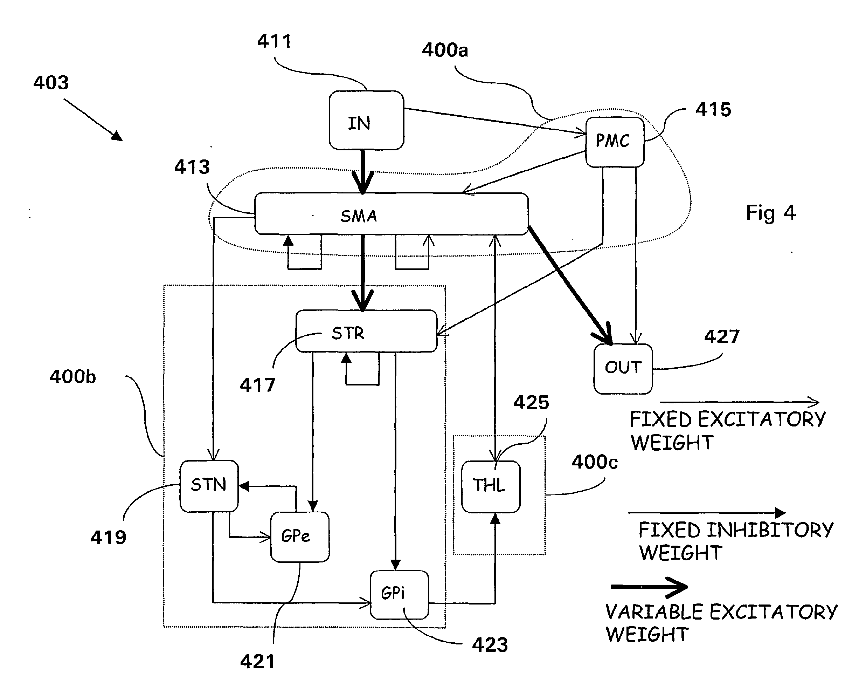

Considering the neural network system 301, as described in Annex 1, it is based on a network known as the ACTION network[vii], shown as a cartoon version of the frontal lobes cortical (cortex) and sub-cortical structures (basal ganglia, cerebellum) in Figure 4. The ACTION network 403 is a recurrent neural network that undergoes supervised learning, and which comprises a plurality of layers, which are specifically a first layer 400a comprising two cortical regions, the SMA 413 and the PMC 415; a second layer 400b comprising the basal ganglia, composed of the STR 417, the STN 419 and the GPe, GPi 421, 423 (external and internal respectively); and a further layer 400c comprising the THL 425. Each ACTION network 403 is operable to receive an input 411 and produce an output 427.

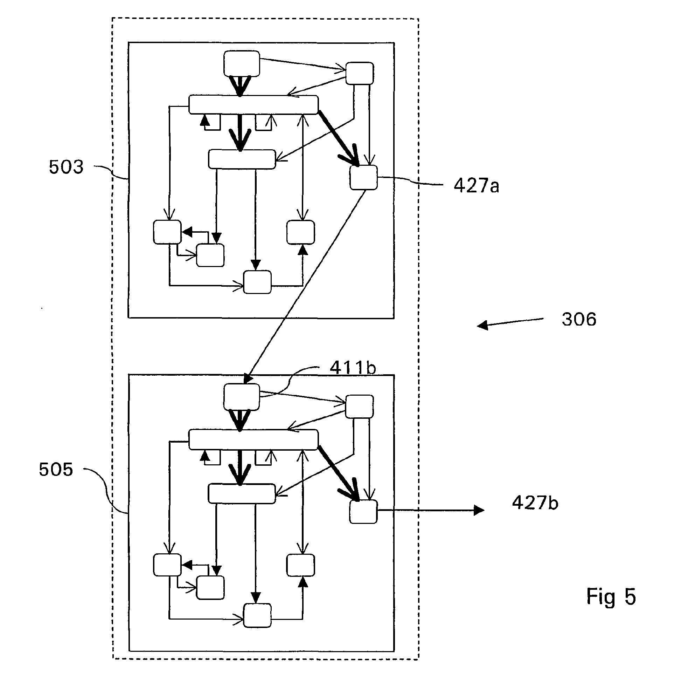

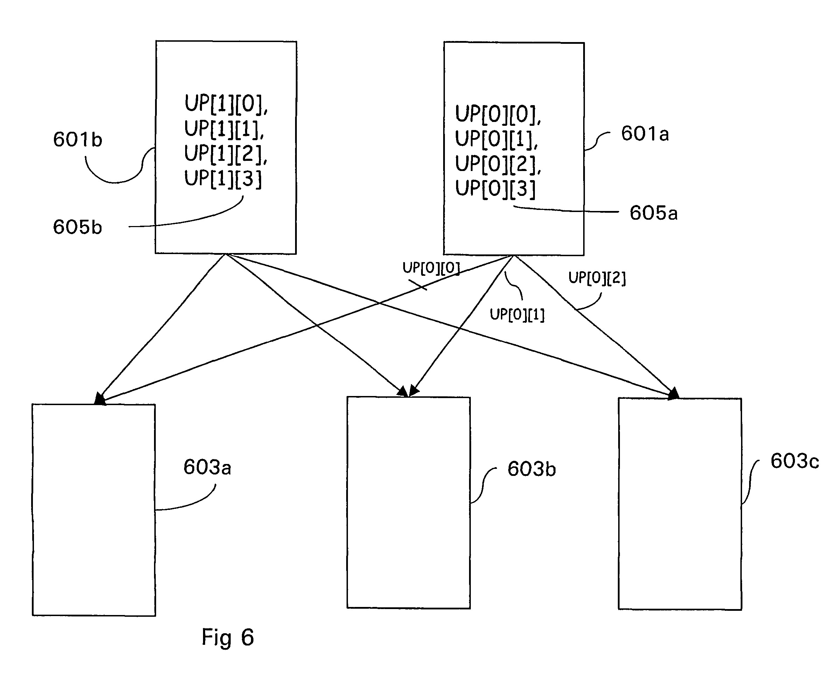

A task unit 306 is shown in Figure 3, comprising a number of ACTION networks 403 arranged in a hierarchical relationship. Figure 5 shows a task unit comprising one upper network 503 and one lower network 505, which is the simplest task unit arrangement possible. The output 427a from the upper ACTION network 503 provides the input 411b to the lower ACTION network 505, and this generates output 427b from the task unit 306. Thus the only difference in architecture between the upper and lower ACTION networks is the inclusion of connection 427a from the upper ACTION network 503 to the lower ACTION network 505. As shown in Figure 3, there may be a plurality of task units, each of which, as reproduced in Figure 6, may comprise one upper ACTION network 601a, 601b connected to a plurality of lower ACTION networks 603a, 603b, 603c (to give two task units comprising respectively the ACTION networks (a) 601a, 603a, 603b, 603c and (b) 601b, 603a, 603b, 603c). As all of the networks 601, 603 are identical with respect to their components, they are each capable of storing up to four values (which for this particular embodiment are tasks or sub-tasks thereof). There is no limit to the number of levels that may be connected to provide output sequences, and the system may be categorised in terms of numerous upper and lower ACTION network couplings.

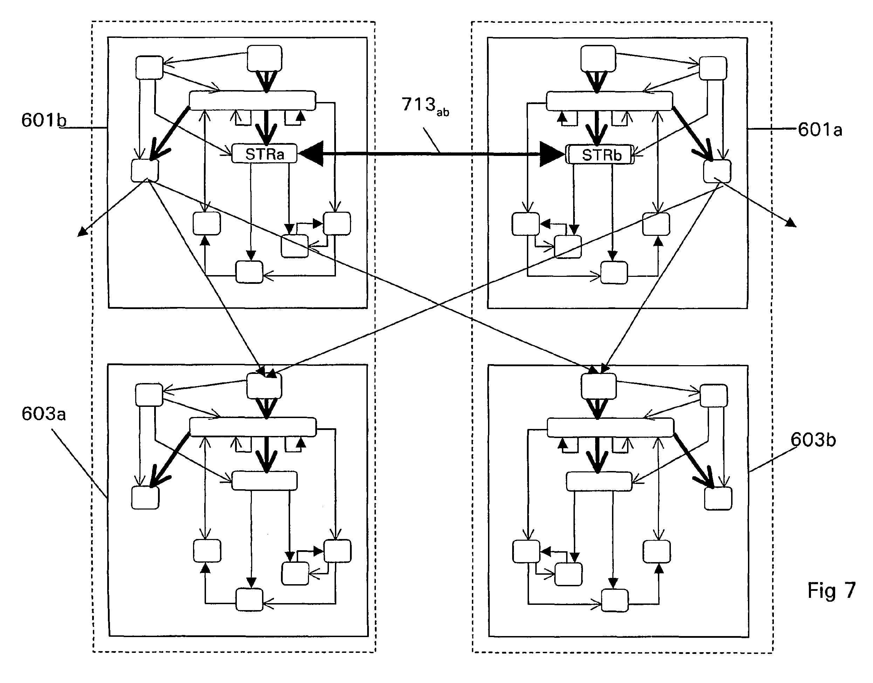

As further discussed in Annex 1, and as is shown in Figure 7, two or more task units may be connected laterally by means of a connection link 713, which is a variable weight connection, and connects the STR layers 417 between associated upper networks 601a, 601b. Figure 7 only shows two task units interconnected by link $713_{ab}$; there is a one node-to-all nodes link for each STR layer of the upper ACTION network of each task unit[viii]. Varying the weight on this link provides a means of simulating competition between the respective task units, and thus respective tasks.

The neural network system 301 of the co-pending application can be trained to reproducibly output a series of elements in a known and desired sequence order. Once trained, the output from each upper ACTION networks 601a, 601b acts as a seeding pattern to the lower ACTION networks 603a, 603b, 603c, and each upper ACTION network 601a, 601b initiates the series of elements in the order specified in its output array 605a, 605b. The whole sequence will be generated in the correct order from a single seed into the upper ACTION network, while the outputs therefrom are hidden and the sequence is controlled by the lower ACTION networks 603a, 603b, 603c. Figure 6 also shows that the inputs to and outputs from the ACTION networks are numbers, which may be hard-wired or software switched, depending on the system design, to effect tasks or sub-tasks. Each task unit 306 may only output a single task, such that, if one upper neural network is connected to more than one lower neural network, as shown in Figure 6, each of the outputs of the lower neural networks must be sub-tasks of a single task.

Description of Identifying means 303

The identifying means 303 comprises means for storing sequences of elements together with information that is used to perform classification of the sequences. The identifying means 303 may be provided by a plurality of Self-Organising Map (SOM) units 304a, 304b; a Self-Organising Map is well known to those skilled in the art to be a classifier. A SOM is an unsupervised learning neural network that is modular (in the sense that each SOM is self-contained and once trained does not require re-training), and is suitable for applications that do not require re-generation of sequences (as is the case in the present invention). Further details of the SOM may be found in, for example, Fausett, L. (1994), Fundamentals of Neural Networks: Architectures, Algorithms, and Applications, Englewood Cliffs, NJ: Prentice Hall, ISBN 0-13-334186-0.

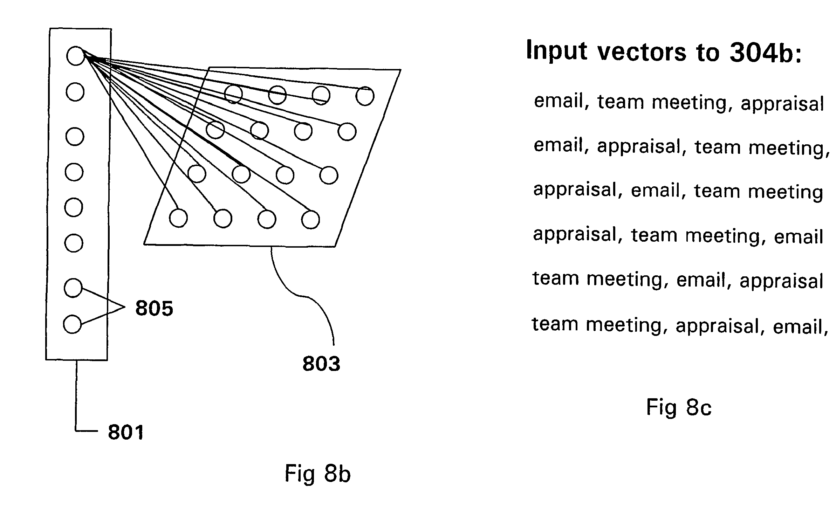

The structure of a SOM includes an input layer 801 and an output layer 803, shown schematically in Figure 8b, where each layer comprises nodes 805. Each node of the input layer 801 is adapted to receive an input (represented by an input vector), and each input node is typically fully connected to every node on the output layer (shown for one input node only). There is also a weight associated with each connection from the input layer to the output layer. The input layer 801 may comprise any number of input nodes, but in general the number of input nodes should be greater than the dimension order of the output layer grid space (i.e. if output layer 3x3, the dimension order is 3).

Once trained, an SOM is operable to receive an input and to determine which node on the output layer (best) corresponds to this input. Thus an SOM classifies inputs by identifying a "winning" node on the output layer.

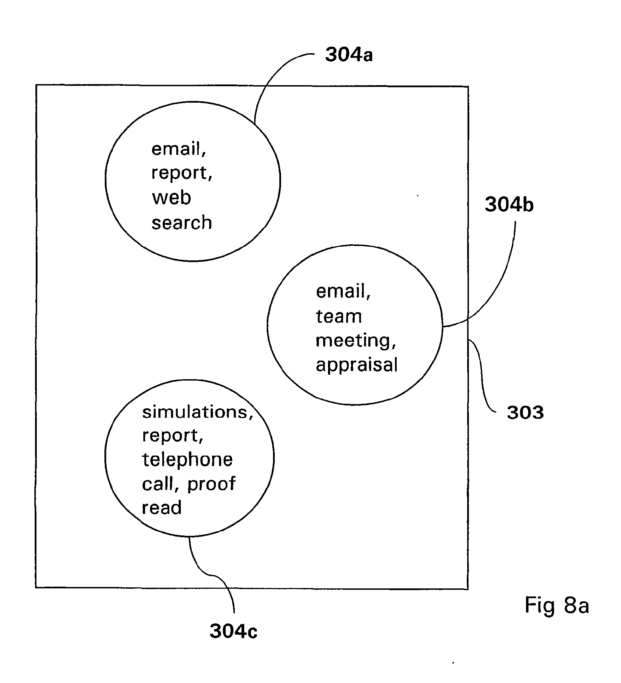

A preferred arrangement of the SOM system 304, having three SOM units 304a, 304b, 304c, is illustrated in Figure 8a, where each SOM unit has been trained on, and stores, permutations of different predetermined tasks. For example, typical tasks that may be stored by the SOM system 304 may include:

$SOM_1^-$ 304a = email, report, web search;
$SOM_2$ 304b= simulations, report, telephone call, proof read;
$SOM_3$ 304c = email, team meeting, appraisal.

etc.

Description of links 305a, 305b

The links 305a, 305b provide connections between an output from the SOM system 304 and inputs to the neural network system 301 for generating sequences of elements. Specifically, the links 305a, 305b are connected to a node on the output layer 803 of an SOM unit 304a, 304b, wherein this node, known as the "winning node" is determined as described above. Each of the links 305a, 305b carries a weight between the winning node 309 and each of the task units 306 comprising the neural network system 301. Each of the first ends 307a, 307b of the links 305 connects to the winning node 309 on the said identified SOM unit, and each of the second ends of the links 311a, 311b preferably connects to a node on the STR layer 417 of each of the upper ACTION networks of the task units 306.

*Training of the sequence generator 201*

The training data that is used comprises a plurality of sets of "previous tasks", and "subsequent tasks", the former of which provides input to the SOM system 304 (as described above), and the latter of which provide input to the neural network system 301. These "previous" and "subsequent" elements are most preferably previously observed sequences of user tasks (and sub-tasks, see below) and will be referred to as such.

Learning of "previous" elements: SOM system 304

As described above, each SOM unit undergoes a training phase before it can be used to classify inputs. For each of these SOM units 304a, 304b, 304c, this includes formulating input vectors of tasks, or sub-tasks and storing the tasks, then inputting the input vectors to the units. Each input vector comprises a permutation of the tasks, as shown in Figure 8c for unit 304b. The output layer of the SOM unit 304b learns, in a manner well known to those skilled in the art, how to classify the permutations, and the SOM unit 304b stores the tasks. A single node on the output layer corresponding to a given input permutation may identify the classification, such that each of the nodes on the output layer defines one permutation of the tasks (or sub-tasks, if the sequence generator is used to generate sequences of sub-tasks only).

Learning of "subsequent" elements: neural network system 301 for generating sequences of elements

As disclosed in Annex 1, and as described briefly above, each task unit 306 is operable to output a task and a series of sub-tasks thereof. It is possible that the task units 306 may already have been trained to generate certain sequences. Thus, before the sequence generator 201 of the present invention is operable to be trained, the sequences that the neural network system 301 has already learnt is assessed, and compared with those comprising the "subsequent" elements. If it is shown that the neural network system 301 needs to learn more sequences in order to reproduce all of the sequences comprising the "subsequent" elements, it is trained accordingly. Typically, this process comprises the following steps (details of training presented in Annex 1):

- S901 Compare the outputs of the task units 306 with the "subsequent" elements;
- S902 Identify whether the "subsequent" group includes a task that is not provided by any of the task units 306;

❖ S911 If the mis-match is a task, then a whole task unit will have to be trained:

(i) S912 Train one or a plurality of lower ACTION networks to provide the corresponding sub-tasks; and
(ii) S913 Train an upper ACTION network, having as its first element the missing task, to output a sequence that activates these freshly trained lower ACTION networks in the required order.

❖ S921 If the mis-match is in the sub-tasks of a task:

a) S923 Identify the task unit which has the mismatch of sub-tasks;
b) S924 Identify whether the missing sub-tasks could be provided by a combination of existing lower ACTION networks;

(i) S925 If the missing sub-tasks could be provided by a combination of existing lower ACTION networks, train a new upper ACTION network comprising this task unit to trigger this combination;
(ii) S926 If the missing sub-tasks could not be provided by a combination of existing lower ACTION networks, train a lower ACTION network (or combination of lower ACTION networks) to provide the required sub-tasks.

Once the neural network system 301 and the SOM system 304 have been independently trained to replicate the data comprising the "previous" and "subsequent" sets (the training preferably occurs for multiple such sets), the combined sequence generator is trained. This training occurs by applying reinforcement learning, where the system "tells" the net how well it performs, and which is effected by modifying weights on the links 305a, 305b. Accordingly, upon inspection of the output of the sequence generator 201, which is also the output of the neural network system 301, the weights on the links 305 are modified (if necessary) so that the output converges towards, and ultimately replicates, the sequence of "subsequent" tasks.
The weights preferably take the following form:

$$hipp_{ij}{}^{\alpha\beta_k}(t) = hipp_{ij}{}^{\alpha\beta_k}(t-1) + cr.\frac{\sum\limits_{m,t}(R_m{}^{\beta_k}(t))}{N^2.t_{max}} \qquad (1)$$

where $k$ represents the link (305a, 305b), $ij$ represents a node (309) on an SOM unit, $\alpha$ represents an SOM unit (304a), $\beta_k$ represents the task unit to which the second end of the link is connected (311a, 311b), m represents a connected node within the STR layer of the $\beta_k$ task unit, $t$ is time, $R_m{}^{\beta_k}(t)$ is the activity of node $m$ at time $t$, $N$ is the dimension of the STR lattice comprising the STR layer (i.e. number of nodes), $t$ is the maximum number of time steps that is required for a task unit to run through its sequence of elements and $cr$ is the reward factor.
The reward factor, $cr$, takes the value of 1 if the output sequence from the sequence generator 201 replicates the "subsequent" sequence order, and -1 if it does not.

*Operation of the sequence generator 201*

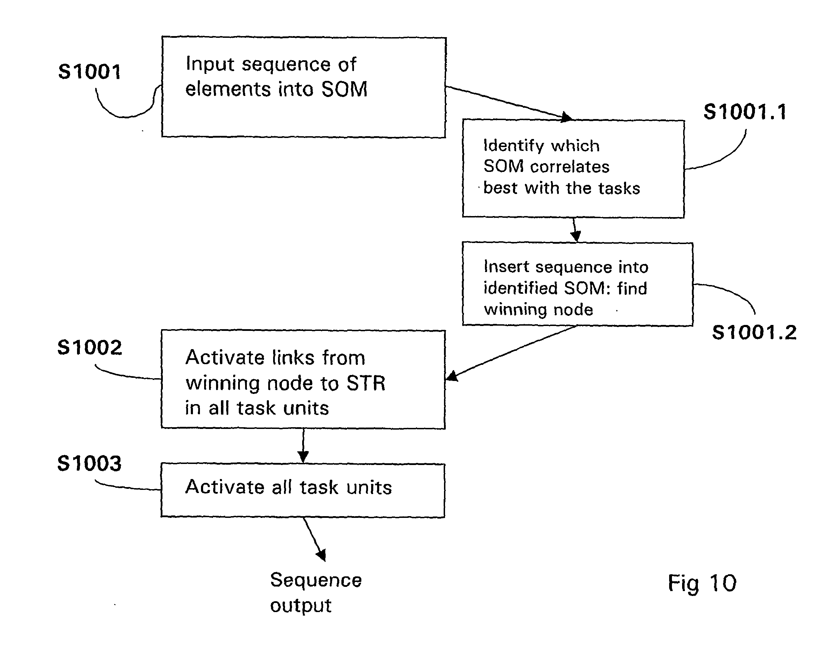

Referring to Figure 10, once trained and in operation, the sequence generator 201 undergoes the following steps:

- S1001 Input a sequence of elements, or tasks to the Self-Organising Map system 304. This input sequence is unlikely to have been used as training data (categorised as "unseen" data), in which case:

  ❖ S1001.1 Identify which of the SOM units correlates best with the tasks, by applying simple pattern matching, or similar;
  ❖ S1001.2 Insert the input sequence as input vector to the identified SOM unit.

  This identified SOM unit is activated, and a "winning" node 309 (*rf*) is identified on the output layer, thus classifying the input vector.
- S1002 Activate the links 305n from the winning node, 309 *rf,* to the STR layer 417 of each task unit 306 $\beta_k$, comprising the neural network system 301, applying the weights, *hipp,* that have been learnt between that winning node 309 (*rf*) and said task units 306 $\beta_k$ during the learning phase.
- S1003 Activate all of the task units comprising the (trained) neural network system 301. The system 301 is then run using the weights pre-learnt (and/or those additionally learnt during the learning period). The task units thus compete with one another, yielding a hierarchy of tasks that define a task order.

When the "unseen" tasks are tasks that the user has just performed, the output of this embodiment 201 is thus a plan of tasks, which is at least partly a function of a previous set of tasks.

In practical terms, the present invention can be used where at least one processable event has already occurred, and thus has wide ranging application. Typical examples include the following:

SOFTWARE AGENT-INTERACTION.

At present, agent interaction may be defined by plans, stored in a pre-defined plan library. However, the present invention may be used to dynamically schedule agent tasks, receiving as input the most recently completed actions, and providing as output the most suitable events to be processed next.

SYSTEM CONTROL

When the operation of a system involves sequential movements of control devices, such as valves in a drainage system, the selection of movements may partly depend on any previous actions. For example, in a drainage system, where there is a plurality of electronically operated valves, a task such as "drain pipe in Section *n*" may correspond to the general task "drain", but this general task may take several forms, each comprising alternative sub-tasks corresponding to the Section to be drained. Selection of the appropriate form may be learnt in the manner described above, such that in operation, the sequence generator 201 will select a drain function to suit the preceding valve conditions (e.g. position of valve).

USER TASK SCHEDULING

Typically a human has a set of tasks that require completing over a given time scale. In order to perform these tasks most efficiently, it may be pertinent to take into account tasks that have most recently been completed, as this may stimulate a different choice of subsequent tasks compared with if the human had started working afresh.

MODIFICATIONS AND ADDITIONAL DETAILS:

As is known in the art, a critical issue in developing a neural network is generalisation: how well will the network make predictions for cases that are not in the training set? Neural Networks, like other flexible non-linear estimation methods such as kernel regression and smoothing splines, can suffer from either under-fitting or over-fitting. The number and selection of training data that is used to train the neural network is crucial to its subsequent performance: put simply, the training data is used to provide an empirical solution (the system "learns" this empirical solution), from which a solution to any data can be extrapolated. Thus the selection of input data that is used for training should result in a representative solution, avoiding the problems of over-fitting, under-fitting, and reducing noise. As described above, the identifying means 303 may be provided by means other than a plurality of SOM units, and if provided by another neural network arrangement, these alternative means require similar attention to training data.

In general, a SOM unit tries to find clusters such that any two clusters that are close to each other in the output layer 803 have vectors close to each other in the input space, but this requires *a priori* knowledge of relationships between inputs (nodes) comprising the input layer. In the present invention it may be the case that all of the inputs are independent of one another, or that insufficient information about their relationships is available; in this situation, an alternative, although more restrictive, form of the identifying means 303 could be provided by dedicated nodes that store previously completed task information. With such an arrangement, the sequences generated for inputs will be less useful than when a SOM system is used because the identifying means can only provide guaranteed solutions that correspond to the dedicated nodes (i.e. for input data that the identifying means has explicitly been trained on).

The neural network system 301 may be replaced by a recurrent network, such as Elman[ix] or Hopfield[x] networks, both of which are artificial neural networks, and the biological neural network described in Zipser, "Recurrent Network Model of the Neural Mechanism of Short-Term Active Memory", Neural Computation 3, 179-193, 1991. These alternative recurrent networks would require some modification from their standard form in order to receive input from adaptive weighted links 305a, 305b.

Many modifications and variations fall within the scope of the invention, which is intended to cover all configurations of the generator described herein.

As will be understood by those skilled in the art, the invention described above may be embodied in one or more computer programs. These programs can be contained on various transmission and/or storage mediums such as a floppy disc, CD-ROM, or magnetic tape so that the programs can be loaded onto one or more general purpose computers or could be downloaded over a computer network using a suitable transmission medium.

Unless the context clearly requires otherwise, throughout the description and the claims, the words "comprise", "comprising" and the like are to be construed in an inclusive as opposed to an exclusive or exhaustive sense; that is to say, in the sense of "including, but not limited to".

**ANNEX 1**

Modelling Preferred Work Plans

Presented in "Intelligent Systems and Soft Computing: Prospects, Tools and Applications", published by Springer-Verlag under the Lecture Notes in Computer Science, State of the art surveys series, volume no. 1804, published June 00.

NR Taylor
Department of Mathematics
King's College, London, WC2R2LS, UK

**1. Introduction**

Temporal sequence storage and generation is important during our everyday lives. The sequences of actions that we perform to accomplish tasks are learnt as fixed automatic sequences, called schemata, and are then used in planning solutions. Hence for planning, schemata are required to be set up.

The problem tackled here is to plan a user's work schedule in a manner that takes account of the user's own preferences. Such a system will not only plan the order in which work is tackled at a high level, but also at a low level within a work task. Where all planning is based upon data of the user's own preferred working patterns. This requires the tasks the user performs to be learnt, as well as the temporal sequence of sub-tasks that are required to complete a particular task, these are the schemata of a user's work actions. Then the user's preferences for performing tasks in certain orders are learnt, in order to use the schemata in forming a planned work schedule.

There are a number of neural networks that achieve temporal sequence storage and generation. Time-delay neural nets (Waibel, 1989; Waibel et al., 1989) implement Hakens embedding theorem which states: that measurements of a time series produced by an underlying dynamical system can always allow the underlying dynamics to be reconstructed by using an embedding vector of a time-lagged set of the elements of the measured series. Recurrent models include: the spin-glass approach of Hopfield (Hopfield, 1982); nets with context neurones (Jordan, 198?, Elman 198?) and extensions to the Elman net (Wang & Arbib, 1990; 1996); the crumbling history approach (Reiss & Taylor, 1991; Taylor & Reiss, 1992). We do not use the above models in our system. The Hopfield model has problems with the length of sequence that can be generated. The Elman net approach uses associative chaining to generate sequences, this leads to multiple representations for the same outputs, which is computationally expensive. The crumbling history approach will encounter problems during planning due to its method of sequence generation. It uses the last output of the model as the next input, during a competitive process between different modules disrupting the output (i.e. generating the incorrect output) produces a competition between different sequences than that originally intended. We require a system to learn long sequences, in a manner that is computationally less expensive than Elman nets, and where sequence generation is accomplished in an 'internal' manner once the sequence generation has been started. So we turn to the frontal lobes of primates.

The frontal lobes of complex cortical and sub-cortical structures. Humans can learn, with practice, temporal sequences of long length; additionally evidence from single-cell recordings during motor sequence generation of monkeys (Tanji & Shima, 1994; Halsband et al., 1994) suggest that chunking occurs during sequence learning. Chunking is the process by which short sub-sequences of actions are linked together to provide a memory of all the actions performed by that 'chunk'. This allows the use of the chunking neurones to perform a sub-sequence where ever it occurs in a total sequence. So multiple representations of sub-sequences do not occur. To solve the sequence learning part of the problem, stated above, we use a model based on the structure of the frontal lobes.

We begin, in section 2, with a description of a neural network which performs basic temporal sequence storage and generation by learning short sequences of up to length four. In section 3 we describe how, by using the short sequence learner, longer sequences can be learnt and regenerated. How these learnt sequences can be used to. learn the user's work preferences are described in section 4.

## 2. The ACTION Network

2.1 Architecture

As mentioned above the first stage of building the system is to develop a network capable of temporal sequence storage and generation of work actions. The structure used for this is the ACTION network (Taylor, 1995; Taylor & Alavi, 1996), a recurrent neural network. This is a cartoon version of the frontal lobes cortical and sub-cortical structures, where it is termed the basal ganglia-thalamocortical circuit. The frontal lobes are important for working memory maintenance and a number of separate circuits exist (Alexander, DeLong & Strick, 1986). The motor circuit is important for generating, from memory, temporal sequences of motor actions (Tanji & Shima, 1994; Halsband et al, 1994).

Different versions of the ACTION net has been used to solve a variety of tasks, from psychological delayed response tasks (Monchi & Taylor, 1995; 1997; 1998) to sequences of motor actions with delays (Taylor, 1998, Taylor & Taylor, 1998). Figure 1 shows the frontal regions modelled for the ACTION net version used here. The ACTION net comprises two cortical regions the supplementary motor cortex (SMA) and the pre-motor cortex (PMC), the basal ganglia, thalamus (THL) and sub-thalamic nucleus (STN). The basal ganglia is composed of two layers the striatum (STR) and the globus pallidus which is modelled as its internal and external segments, GPi and GPe, respectively. Neurophysiological and psychological studies have suggested that the SMA is responsible for movements from memory while the PMC generates movements from visual instruction (Tanji & Shima, 1994; Halsband et al, 1994; Passingham 1987, 1993) and both are necessary to learn a new sequence (Passingham 1987, 1993). The neurones modelled are mean firing rate with all but IN and OUT neurones being leaky integrators. This model can hold activity over long periods of time due to the many closed loops that exist within its structure. Most of the sub-cortical structure provides for a competition of excitatory input and inhibitory input onto the GPi via the STN and STR, respectively. When the GPi is inhibited this releases the inhibition exerted by it on the THL, which then allows the THL to become spontaneously active. Active thalamic neurones then causes reverberation of activity between SMA and THL. This leads to sustained activity over long time periods, which can be turned off by removing the inhibition on GPi from the STR, thus the GPi becomes positively excited inhibiting THL once again. This removes the chance of reverberating activity between SMA and THL. The net effect of the complete basal ganglia is as a disinhibitor.

Figure 1. The ACTION network, where SMA is supplementary motor area, PMC pre-motor cortex, STN sub-thalamic nucleus, GPe external region of globus pallidus, GPi internal region of globus pallidus, THL thalamus, STR striatum, IN input layer and OUT output layer. Open arrow-heads indicate excitatory weights, closed arrow-heads inhibitory connections.

2.2 Training

The system consists of a number of ACTION net modules with each module learning a sequence of up to four work actions. The adaptable weights are: IN to SMA, SMA to OUT, and SMA to STR, which is a reduction from previous models (Taylor, 1998; Taylor & Taylor, 1998).

Each work action is represented by a specific number, and it is these numbers which are used as inputs to each module. The output of the module must regenerate the input. Training begins with the presentation of the first two inputs of the sequence, the correct outputs must be generated in response to the external stimuli. Once this can be performed correctly the module is presented with the first input, in response to which it is required to produce the first output followed by the second output, where the second is generated internally by the network. Hence the first input is used to initiate the sequence regeneration and is known as the 'seeding' input. When the length two sequence can be generated by seeding, the first three inputs are presented to the net and again the correct three outputs must be played out in the correct order. After this the net is seeded again and the three outputs most be correctly generated with the second and third generated internally. This is repeated for the length four sequence. If the wrong output is generated training returns to the previous stage.

Weights are updated using Hebbian and reinforcement learning rules, so the information the network receives is whether the output was correct or incorrect, not what the output should have been. A reinforcement learning rule, for a weight $w_{ij}$ is of the form:

$$\Delta w_{ij} = r \, \varepsilon \, u_i u_j \tag{1}$$

where $u_k$ is the output of neurone $k$, $\varepsilon$ is the learning rate and $r$ is the reward defined by:

$$r = \begin{cases} 1, \text{ if output is correct} \\ -1, \text{ otherwise} \end{cases} \qquad (2)$$

2.3 Results

Using suitable weight initialisations and parameter choices length four sequences can be learnt. The number of trials required for the training process, using different initialisations, range from 180 to 1800. Figure 2 shows some neurones that are active during a sequence generation. Simulations have shown that certain regions are important in being able to learn and generate sequences. The model of figure 1 had the STN and GPe removed, although some sequences could be learnt and generated, other sequences could not. The sequences that it failed on could be learnt and generated by the model of figure 1.

**3. Longer Sequences**

At this stage the system can only learn work sequences of up to length four. By using ACTION net modules in a hierarchical system sequence length can be built up in powers of four. Hence two levels of ACTION modules means sequences of up to length 16 can be learnt and regenerated. The second level ACTION nets are termed the first level or order chunking modules which excite the low order modules (figure 3).

The only difference in architecture between chunking modules and lower order modules is the inclusion of connections from the chunking module OUT layer to the low order IN layers. The chunking modules outputs therefore act as a seeding pattern to the low order modules. So whilst the low order modules are trained on a continuous sequence of up to length four, the chunking modules are trained to generate the first then every fourth subsequent input in response to seeding with the first input. Hence for the sequence {1,2,3,...,14,15,16} four low order modules are trained to generate one of the sequences {1,2,3,4}, {5,6,7,8}, {9,10,11,12}, {13, 14, 15, 16} whilst the first order chunking module is trained to generate {1, 5, 9, 13} which are the four seeding inputs of the low order nets. The whole sequence is generated in the correct order by seeding the chunking module, the outputs of the chunking module are hidden and the sequence generation is controlled by the low order modules.

Ist    level    chunking

Ist    level    chunking
module OUT layer

Low order modules

Figure 3. The arrangement of ACTION nets to generate sequence of length 1 to 16, showing the Ist level chunking module and the four low order modules.

The benefit of this hierarchical structure of ACTION nets is the re-usability of low order modules by many chunking modules. A complete sequence will only be learnt once, there is no need to have a number of chunking modules that produce exactly the same sequence. However a user might solve a particular task in a number of different ways, depending on what the work entails. So within a group of sequences, which can solve the same task, there maybe sub-sequences which are common. Rather than represent the sub-sequence by many low order modules it is advantageous for space and speed to re-use the low-order module that can already generate the sub-sequence. Figure 4 indicates four chunking modules, all of which are possible user solutions to a particular task, which have common sub-sequences.

Chunking modules

Low order modules

Figure 4. The arrangement of chunking re-using low order modules; each box represents an ACTION net of the form of figure 1.

## 4. Learning User preferences

Sections 2 and 3 have described the basis of the system for learning the sequences that a user performs to solve work tasks. Now we turn to learning the orders in which the user prefers to perform work. The user preferences are used by the system to order a pool of outstanding work tasks in a manner the user would have chosen. Two possible solutions are discussed: (a) sequences of tasks level and (b) task level, both of which use a competitive process between chunking modules. The preferences learnt form the salience, which is the level of preference for an object compared to other objects. In the case of method (a) the salience will be the preference of one specific order of sequence tasks over another order of the same tasks; for method (b) the salience is the preference of a particular task over all other tasks within a particular pool of tasks.

4.1 Architecture

The architecture is the same for both methods of competition, involving the addition of inhibitory connections between the striata of the chunking modules (figure 5). All existing modules are connected to all other modules via these weights, with no self-recurrence.

Figure 5. The competitive inhibitory weights connecting the striata of ACTION nets. With the competitive weight denoted *c*.

### 4.2 Sequences of Tasks Level Competition

The sequences of tasks level of competition requires that the sequences that are learnt and regenerated consist of tasks. Then the stored sequences are the user's preferred working patterns. There are a number of problems with this method. Due the method of sequence generation, by seeding with the first pattern, all sequences which start with one of the tasks in the pool will compete in the competition whether or not the sequence contains only the tasks resident in the pool. This could lead to plans being produced that contain all tasks the tasks contained in the pool and others that are not, or plans which contain only some of the tasks in the pool. This method of learning user preferences cannot generalise if the pool contains a particular group of tasks that the system has not been trained on. So we move to competition at the individual task level.

### 4.3 Task Level Competition

In this case the sequences involved in the competition are those that represent the different stages used to solve one task. Hence the sequence regenerated consists of the task, followed by the order of sub-tasks used to solve that task. Now if all the tasks present in the pool are presented to the system the only sequences that will be regenerated are those that begin with one of the tasks in the pool.

### 4.3.1 Training

To train the user preferences the sequence that the user likes to perform certain tasks in is used as a template. The task name is used to 'seed' all sequences that begin with that input. Hence during salience training all task names contained within the data stream are presented to the system at the same time. One module, for one of the tasks in the preferred ordering, will be the winner (i.e. most active) at the end of the sequence re-generation. This winner is then compared with the template and weights are updated according to a modified reinforcement training law. The competitive weights which are negative are denoted $c_{ij}$, which identifies the weight from module $j$ to module $i$. The update rule is defined as:

$$c_{i*j} = c_{ij} + 0.5 \text{ reward act}_j \text{ act}_{i*} \tag{3}$$

$$c_{ji*} = c_{ji*} - 0.5 \text{ reward act}_j \text{ act}_{i*} \qquad (4)$$

where

$$\text{reward} = \begin{array}{l} 1 \text{ if winning module matches template} \\ \\ -1 \text{ if winning module does not matches template} \end{array} \qquad (5)$$

and $i^*$ represents the winning module, and $\text{act}_k$ is the average output of a striatal neurone during the competitive process from module $k$.

Equation (3) therefore has the effect of changing the weights to the winning module. These become less negative if the winner is correct, remembering that these connections are inhibitory; hence reducing the combined inhibitory action. If the winner is wrong the weights are made more negative to it such that it will not win the competition in the next trial. Equation (4) controls the weights from the winning module to all other modules that were excited. If the winner is correct the inhibitory weights are strengthened to all other active modules, if wrong then the weights are weakened. Equations (3) and (4) only act to change the competitive weights of active modules, hence previously learnt saliencies for tasks not involved in the current competition are not altered.

Once the competitive weights have been learnt such that the first task of the data stream is the winner, when that particular pool of tasks is presented, then that task is removed from the pool and training continues using the same method with the remaining tasks.

For example, given a pool of tasks $\{T_1, T_2, T_3, T_4, T_5, T_6\}$ with a preferred user order of: $T_2, T_6, T_1, T_5, T_3, T_4$. Training commences with input to the trained chunking modules of all of the tasks in the pool. We require from this first stage that $T_2$ be the winning module. Training continues using the above equations until this is the case. The next training phase removes $T_2$ from the pool of tasks to leave the following pool $\{T_1, T_3, T_4, T_5, T_6\}$ for which the preferred order is: $T_6, T_1, T_5, T_3, T_4$. The training must then modify the weights such that $T_6$ is the next winner. $T_6$ is then removed from the pool of tasks and training continues as previously for the remaining four tasks, using their preferred order. The context resulting from previous tasks is at this point not included, but is covered in the later hippocampal stage of the project.

4.3.2 Producing a Plan from a Pool of Tasks

We wish now to order a pool of tasks, given that the system has learnt a number of the user's preferred work patterns, in a manner that the user will find acceptable. To order this pool of tasks, all of the tasks are input to the chunking modules. The chunking modules, with any of the tasks as their seeding input, become active and a winning module is found, which has as its first output a certain task. This task is then put first in the current work plan and removed from the pool of tasks. The resulting pool of tasks is then input and a new winner found, which is the second entry to the work plan; this new winner is then removed from the pool. This method of competition and winner removal continues until only one task is remaining in the pool, at which point it is placed last in the proposed work plan.

4.4.3 Results

We have presented to trained systems preferred work orderings of : 2 tasks, 4 tasks, 6 tasks and 8 tasks (5 simulations for each). In every case the preferred ordering was learnt and could be regenerated. Table I shows the average trials required to learn the preferred sequence order for the different numbers of tasks. Table I

| Number of Tasks | Average Trials |
| --- | --- |
| 2 | 1.4 |
| 4 | 4.4 |
| 6 | 8.4 |
| 8 | 20.6 |

Figure 6 shows two graphs, of the average results obtained from the 8 task case. Figure 6(a) indicates the average number of trials required to get the $n$th task in the correct position given that the previous $n$-1 tasks are already correctly ordered. The second graph indicates the average number of tasks that are in their correct positions (this does not require for position $n$ the previous $n$-1 positions to be ordered correctly) at each stage when a new position is filled correctly. Figure 6(a) shows that for larger numbers of tasks, as a task is correctly ordered the general trend for the number of trials to correctly order the next task becomes smaller. While figure 6(b) indicates that once 4 tasks are correctly ordered 7 tasks on average are correctly ordered (the number of correct orderings actually range from 5 to 8, with no modules having 7 tasks correctly ordered as this is impossible). We find that for long enough sequences of tasks 6 and 10 (in addition to 8), the results of figure 6(a) are generally repeated. For length 4 the average number of trials required to train each position is nearly the same.

Figure 7 graphs the average number of trials, for length 2, 4, 6, and 8 sequences over 20 simulations each, taken to learn the preferred order of the tasks. The rough doubling in the average number of trials from length 4 (5.15 trials) to length 6 (9.5) to length 8 (20.45 trials), suggest that on average 40 trials will be necessary to train the saliencies of 10 tasks.

Figure 6.

Figure 7.

5. Training the entire System

At this stage we have described the architectures used to learn sequences of a task and its composite subtasks; and how basic user preferences can be learnt between the trained modules in order to plan work in isolation. We have not described the mechanism of how given a data stream consisting of tasks and sub-tasks, which describes a user's daily use, a complete system can be built-up.

An example of the data stream is: *e-mail maintenance*, *open e-mail, reply, archive, close, 0,* **write report,** *open word processor, save, close, 0, etc.* Where *0* indicates the end of the current task. The sequence is split into sequences starting from the first non-zero entry to the next zero entry. So the sequences the system would be trained on would be: *e-mail maintenance*, *open e-mail, reply, archive* and then **write report**, *open word processor, save, close.*

The e-mail sequence would be trained first. The first stage involves passing the sequence of names through a translator to produce a sequence of numbers that the system can use explicitly. In this case the sequence of numbers could be : 56, 90, 82, 80, 35. We wish to see if this complete sequence exists, so the first number which represents the task is presented to the system. All modules that are seeded by that input will become active and generate their respective sequence. The generated sequences can then be compared with the presented sequence. If the complete sequence does not already exist then the length 3 and 4 sub-sequences contained within the sequence 56, 90, 82, 80, 35 are checked against the previously played off sequences, to investigate whether any low order module generates exactly that sequence. If a sub-sequence has previously been learnt then no new low order module is trained for that sub-sequence. For example if the sequence 82, 80, 35 was generated by a low order module, a new low order module would only be trained on the remainder of the sequence 56, 90. Length 1 and 2 sub-sequences are not checked to save time as well as forming too many modules with only 1 or 2 outputs. The low order modules have now been trained for this sequence, these have to be linked together by a chunking module. In this case the sequence the chunking module is trained on is 56, 82 which are the seeding inputs of the 2 low order modules. If no sub-sequences had existed the training sequence would have been 56, 35, but this has been changed by the existence of the sequence 82, 80, 35. Once the chunking module has been trained, the sequence 56, 82 is presented to the system again to excite the correct chunking module outputs and the two lower order modules that generate the total sequence, so training the weights from the OUT layer of the chunking module to the IN layers of the lower order modules. Now when the chunking module is seeded with the input 56 the total output is the original sequence 56, 90, 82, 80, 35. This method is then repeated for all the remaining task sequences in the data stream.

The data stream also provides the user's preferences for task order which can be extracted by removing the first non-zero entry and the first non-zero entry after a zero. In our example this would give the sequence: *e-mail maintenance, write report,* etc. All newly created chunking modules have the competitive c weights initialised to all other chunking modules, which also create the reciprocal weights. Before salience training begins the system is tested to see if the preferences can be generated already, if the correct order can be generated then training is dispensed with.

As mentioned before the user may solve a task in more than one way, if this occurs it is most likely that there is one method that the user prefers, hence this needs to be taken account of during saliency learning.

6. Generating and Using a Plan

With a system trained in the manner of the previous section, a basic plan can be generated for a pool of tasks using the method described in section 4.32. Due to the method of learning saliencies at the task level, if the pool of tasks is such that the system has never been trained on such a pool it can generalise, using the user information it has learnt to produce its best 'guess'. When the work plan has been produced each task is played off as required for the sub-tasks to be generated, this may cause competition again between schemata for the same task.

7. Conclusions

We have detailed a system to solve a particular problem, namely to schedule work in a user friendly way having learnt the user's habits. The system can learn a user's schemata of any length simply by adding more layers of chunking modules. The chunking used attempts to balance between re-using existing learnt sub-sequences and learning many short sequences, by re-using modules that generate short sequences. User preferences of work ordering can be learnt, so far up to 10 tasks long. The forming of plans from schemata can be generalised.

Further work is required to include context of user mental state due to time of day or day of the week. Context will also aid in the selection of the correct schema to solve a task from multiple solutions.

References

Alexander GE., DeLong MR. and Strick PL., 1986; Parallel organization of functionally segregated circuits linking basal ganglia and cortex. *Annual review of Neuroscience* **9**: 357-381

Elman J. L. (1990) Finding structure in time. *Cognitive Science* **14**: 179-212

Halsband U., Matsuzaka Y. and Tanji J. (1994) Neuronal activity in the primate supplementary, pre-supplementary and premotor cortex during externally and internally instructed sequential movements. *Neuroscience Research* **20**: 149-155

Hopfield J. J. (1982) Neural networks and physical systems with emergent collective computational abilities. *Proceedings of the National Academy of Sciences USA* **79**: 2554-2558

Jordan M. I. (1986) Attractor dynamics and parallelism in a connectionist sequential machine. *Proceedings of the Cognitive Science Society* (Amhurst, MA) pp 531-546

Monchi O and Taylor JG (1997). In: Bullinaria JA, Glasspool DW, Houghton G (eds) Connectionists Representations, Springer, London, pp 142-154.

Monchi O. and Taylor JG., 1995; A Model of the Prefrontal Loop that Includes the Basal Ganglia in Solving the Recency task. Proc of WCNN'95 3:48-5'. Hillsdale N.J.: L Erlbaum & INNS Press.

Monchi O. and Taylor JG., 1998; A hard-wired model of coupled frontal working memories for various tasks. *Information Sciences Journal* **113 (3/4)**:221-243. Elsevier Science

Passingham R. E. (1987) Two cortical systems for directing movement. In *Motor Areas of the Cerebral Cortex* Ciba Foundation Symposium 132, John Wiley, Chichester. pp.151-164

Passingham R. E. (1993) *The Frontal Lobes and Voluntary Action* Oxford University Press, Oxford

Reiss M. and Taylor J. G. (1991) Storing temporal sequences. *Neural Networks* **4:** 773-787

Tanji J. and Shima K. (1994) Role for the supplementary motor are cells in planning several movements ahead. *Nature* **371:** 413-416

Taylor J. G. and Reiss M. (1992) Does the hippocampus store temporal patterns? *Neural Network World* **2:** 365-384

Taylor JG. and Alavi F., 1996; A basis for long-range inhibition across cortex. In J.Sirosh, R Miikulainen and Y Choe (eds). Lateral Interactions in Cortex: Structure and Function. The UCTS Neural Networks research Group, Austin TX. Electronic book ISBN 0-9647060-0-8. http:www.cs.utexas.edu/users/nn/web-pubs/htmlbook96.

Taylor JG., 1995; Modelling the Mind by PSYCHE. Proc ICANN'95, ed F Soulie and P Gallinari. Paris: EC2 & Co.

Taylor NR. and Taylor JG., 1998; Experimenting with models of the frontal lobes. Humphreys GW., Olson A,. Heinke D. (eds), *NCPW5 Connectionist Models in Cognitive Neuroscience, Perspectives in Neural Computation series,* Springer-Verlag, pp 92-101

Taylor NR., 1998; Modelling Temporal Sequence Learning. University of London Thesis

Waibel A. (1989) Modular construction of time-delay neural networks for speech recognition. *Neural Computation* **1**: 39-46

Waibel A., Hanazawa T., Hinton G., Shikano K. and Lang K. (1989) Phoneme recognition using time-delay neural networks. *IEEE Transactions on Acoustics, Speech and Signal Processing* **37**: 328-339

Wang D. L. and Arbib M. A. (1990) Complex temporal sequence learning based on short-term memory. *Proceedings of the IEEE* **78(9)**:1536-1543

Wang D. L. and Arbib M. A. (1990) Timing and chunking in processing temporal order. *IEEE Transactions on Systems, Man, and Cybernetics* **23**: 993-1009

<u>ENDNOTES</u>

i Waibel, 1989, "Modular construction of time-delay networks for speech recognition", Neural Computation 1

ii Hopfield, 1982 "Neural Networks and physical systems with emergent collective computational abilities", Proc. National Academy of Sciences, USA 79

iii Jordan, 1986, "Attractor dynamics and parallelism in a connectionist sequential machine", Proc. Cognitive Science Society.

iv Elman JL (1990) Finding structure in time. Cognitive Science 14: 179-212

v Wang & Arbib 1990, "Complex temporal sequence learning based on short-term memory", Proc. IEEE 78(9)

vi Reiss & Taylor 1991, "Storing temporal sequences", Neural networks 4

vii Taylor & Alvi 1996 "A basis for long-range inhibition across cortex", in Lateral Interactions in Cortex: Structure and Function.

viii Generalised by $713_{ij}$, where i represents the 'one' connection and j represents the 'all'.

ix 5 *supra*

x 3 *supra*

**Claims**

1. Neural Network apparatus (201) comprising:

(i) identifying means (303) for

a) receiving a first one or more sequences of elements,
b) accessing stored sequences, and
c) identifying which of the stored sequences the or each of the first one or more received sequences of elements most closely resembles,

which identifying means is operable to output, for the or each received sequence of elements, an identifying signal indicative of the correspondingly so identified stored sequence; and

**characterised in that** the apparatus further comprises

(ii) a sequence generator (301) for generating sequences of elements, operable to receive as input a said identifying signal and to generate a sequence of elements in response thereto;

the apparatus being arranged such that when a first sequence of elements is input to the identifying means (303), the identifying means identifies a stored sequence that the first sequence of elements most closely represents and outputs to the sequence generator an identifying signal indicative of the same, whereupon the sequence generator (ii) generates a second one or more sequences of elements.

2. Apparatus according to claim 1, wherein the identifying means (i) comprises a plurality of classifying units, each of which classifying units comprises:

a) a plurality (801) of first classifying nodes (805);
b) a plurality (803) of second classifying nodes;
c) a plurality of classifying links, each classifying link connecting one of the first classifying nodes with one second classifying node and having a classifying weight associated therewith;

each classifying unit being operable to learn one or more sequences of elements by modifying the classifying weights on the classifying links.

3. Apparatus according to claim 1 or claim 2, wherein the sequence generator for generating sequences of elements (ii) includes one or more task units (306) each task unit comprising an upper and a lower neural network (503,505) connected in a hierarchical relationship and being connected to each of the other task units by means of sequence generator weighted connections (713ab) therebetween.

4. Apparatus according to claim 3, wherein the upper and lower neural networks comprising the sequence generator each comprise at least a first intra-neural network layer (400a) and a second intra-neural network layer (400b), which second intra-neural network layer has feedback to the first intra-neural network layer via a further layer (400c), and each of which neural networks is operable to output a signal indicative of a sequence of elements.

5. Apparatus according to claim 4, wherein the said intra-neural network layers are interconnected by intra-neural network links and at least some of the intra-neural network links are variably weighted, thereby providing a means to modify the sequence output by the task unit.

6. Apparatus according to either one of claims 4 or 5, wherein the elements comprising the sequence are stored as an element array in each neural network, which array defines the order in which the elements are output.

7. Apparatus according to claim 6, wherein each sequence generator weighted connection (713ab) interconnecting one task unit with another task unit comprises an inter-neural network link having two ends, a first end connecting with a second intra-neural network layer of a first task unit upper neural network, and a second end connecting with a second inha-rteural network layer of a second task unit upper neural network.

8. Apparatus according to any one of claims 2 to 7, further including connecting means (305a,305b) for connecting the identifying signal indicative of the identified stored sequence with the sequence generator (301), the connecting means comprising
a plurality of connecting links, each connecting link having two ends and a variable connecting weight thereon, wherein, for each connecting link, a first end connects with the identified one of the second classifying nodes and a second end connects with one task unit comprising the sequence generator (301),
the arrangement being such that each task unit connects with one second end only.

9. Apparatus according to claim 8 wherein each second end connects with the second intra-neural network layer (400b) of an upper neural network (503) of a task unit (306).

10. method of generating a second one or more sequences of elements after processing a first one or more sequences of elements, the method comprising the steps:

   (i) inputting a first sequence of elements to identifying means (303);
   (ii) accessing stored sequences;
   (iii) identifying which of the stored sequences the first sequence of elements most closely resembles;
   (iv) operating the identifying means so as to generate an output signal indicative of the correspondingly so identified stored sequence;
   (v) connecting said output signal to a sequence generator (301) for generating sequences of elements; and
   (vi) operating the sequence generator for generating sequences of elements; such that when the first sequence of elements is input to the identifying means (303), the identifying means identifies which of the stored sequences the first sequence of elements most closely represents and outputs a signal indicative of the same, the output signal is connected to the sequence generator (301) for generating sequences of elements, and the sequence generator (301) outputs a signal indicative of a second one or more sequences.

11. A computer program stored on a computer readable medium and being arranged, when executed by a processor, to perform the steps defined by the method of claim 10.

**Patentansprüche**

1. "Neuronales Netzwerk"-Vorrichtung (201), die aufweist:

   (i) Identifizierungsmittel (303) zum

      a) Empfangen einer ersten Sequenz oder mehrerer Sequenzen von Elementen,
      b) Zugreifen auf gespeicherte Sequenzen, und
      c) Identifizieren, welche der gespeicherten Sequenzen der oder jeder der ersten oder mehreren empfangenen Sequenz(en) von Elementen am ähnlichsten ist,

   wobei das Identifizierungsmittel betriebsfähig ist, für die oder jede empfangene Sequenz von Elementen ein identifizierendes Signal auszugeben, das die entsprechende derart identifizierte gespeicherte Sequenz anzeigt; und **dadurch gekennzeichnet, dass** die Vorrichtung weiter aufweist

   (ii) einen Sequenz-Generator (301) zum Erzeugen von Sequenzen von Elementen, der betriebsfähig ist, als Eingabe das identifizierende Signal zu empfangen und als Antwort darauf eine Sequenz von Elementen zu erzeugen;

   wobei die Vorrichtung derart angeordnet ist, dass, wenn eine erste Sequenz von Elementen in das Identifizierungsmittel (303) eingegeben wird, das Identifizierungsmittel eine gespeicherte Sequenz identifiziert, die der ersten Sequenz von Elementen am Ähnlichsten ist, und an den Sequenz-Generator ein identifizierendes Signal ausgibt, das dieses anzeigt, worauf der Sequenz-Generator (ii) eine zweite oder mehrere Sequenz(en) von Elementen erzeugt.

2. Vorrichtung gemäß Anspruch 1, wobei das Identifizierungsmittel

   (i) eine Vielzahl von Klassifizierungseinheiten aufweist, wobei jede Klassifizierungseinheit aufweist:

      a) eine Vielzahl (801) von ersten Klassifizierungsknoten (805);
      b) eine Vielzahl (803) von zweiten Klassifizierungsknoten;
      c) eine Vielzahl von Klassifizierungsverbindungen, wobei jede Klassifizierungsverbindung einen der ersten Klassifizierungsknoten mit einem der zweiten Klassifizierungsknoten verbindet und eine damit verbundene Klassifizierungsgewichtung aufweist;

wobei jede Klassifizierungseinheit betriebsfähig ist, eine oder mehrere Sequenz(en) von Elementen zu lernen durch Modifizieren der Klassifizierungsgewichtungen auf den Klassifizierungsverbindungen.

3. Vorrichtung gemäß Anspruch 1 oder Anspruch 2, wobei der Sequenz-Generator zum Erzeugen von Sequenzen von Elementen (ii) eine oder mehrere Aufgabeneinheit(en) (306) umfasst, wobei jede Aufgabeneinheit ein oberes und ein unteres neuronales Netzwerk (503, 505) aufweist, die in einer hierarchischen Relation verbunden sind und mit jeder der Aufgabeneinheiten mittels dazwischenliegenden Sequenz-Generator-gewichteten Verbindungen (713a, b) verbunden sind.

4. Vorrichtung gemäß Anspruch 3, wobei die oberen und unteren neuronalen Netzwerke, die der Sequenz-Generator aufweist, jeweils zumindest eine erste Intra-neuronale-Netzwerkschicht (400a) und eine zweite Intra-neuronale-Netzwerkschicht (400b) aufweisen, wobei die zweite Intra-neuronale-Netzwerkschicht eine Rückkopplung (Feedback) mit der ersten Intra-neuronalen-Netzwerkschicht über eine weitere Schicht (400c) hat, und wobei jedes neuronale Netzwerk betriebsfähig ist, ein Signal auszugeben, das eine Sequenz von Elementen anzeigt.

5. Vorrichtung gemäß Anspruch 4, wobei die Intra-neuronalen-Netzwerkschichten untereinander durch Intra-neuronale-Netzwerkverbindungen verbunden sind und zumindest einige der Intra-neuronalen-Netzwerkverbindungen variabel gewichtet sind, wodurch ein Mittel zum Modifizieren der von der Aufgabeneinheit ausgegebenen Sequenz vorgesehen wird.

6. Vorrichtung gemäß einem der Ansprüche 4 oder 5, wobei die Elemente, welche die Sequenz aufweist, als ein Elementarray in jedem neuronalen Netzwerk gespeichert sind, wobei das Array die Reihenfolge definiert, in der die Elemente ausgegeben werden.

7. Vorrichtung gemäß Anspruch 6, wobei jede Sequenz-Generatorgewichtete Verbindung (713a, b), die eine Aufgabeneinheit mit einer anderen Aufgabeneinheit verbindet, eine Inter-neuronales-Netzwerk-Verbindung mit zwei Enden aufweist, wobei ein erstes Ende mit einer zweiten Intra-neuronalen-Netzwerkschicht eines oberen neuronalen Netzwerks einer ersten Aufgabeneinheit verbunden ist und ein zweites Ende mit einer zweiten Intra-neuronalen-Netzwerkschicht eines oberen neuronalen Netzwerks einer zweiten Aufgabeneinheit verbunden ist.

8. Vorrichtung gemäß einem der Ansprüche 2 bis 7, die weiter umfasst Verbindungsmittel (305a, 305b) zum Verbinden des identifizierenden Signals, das die identifizierte gespeicherte Sequenz anzeigt, mit dem Sequenz-Generator (301), wobei das Verbindungsmittel aufweist
eine Vielzahl von Verbindungen, wobei jede Verbindung zwei Enden und darauf eine variable Verbindungsgewichtung hat,
wobei in jeder Verbindung ein erstes Ende mit dem identifizierten der zweiten klassifizierenden Knoten verbunden wird und ein zweites Ende mit einer Aufgabeneinheit verbunden wird, die den Sequenz-Generator (301) aufweist, wobei die Anordnung derart ist, dass jede Aufgabeneinheit nur mit einem zweiten Ende verbunden wird.

9. Vorrichtung gemäß Anspruch 8, wobei jedes zweite Ende mit der zweiten Intra-neuronalen-Netzwerkschicht (400b) eines oberen neuronalen Netzwerks (503) einer Aufgabeneinheit (306) verbunden wird.

10. Verfahren zum Erzeugen einer zweiten oder mehrerer Sequenz(en) von Elementen nach der Verarbeitung einer ersten oder mehrerer Sequenz(en) von Elementen, wobei das Verfahren die Schritte aufweist:

(i) Eingeben einer ersten Sequenz von Elementen in das Identifizierungsmittel (303);
(ii) Zugreifen auf gespeicherte Sequenzen;
(iii) Identifizieren, welche der gespeicherten Sequenzen der ersten Sequenz von Elementen am ähnlichsten ist;
(iv) Betreiben des Identifizierungsmittels, um so ein Ausgabesignal zu erzeugen, das die entsprechende derart identifizierte gespeicherte Sequenz anzeigt;
(v) Verbinden des Ausgabesignals mit einem Sequenz-Generator (301) zum Erzeugen von Sequenzen von Elementen; und
(vi) Betreiben des Sequenz-Generators zum Erzeugen von Sequenzen von Elementen;

so dass, wenn die erste Sequenz von Elementen in das Identifizierungsmittel (303) eingegeben wird, das Identifizierungsmittel identifiziert, welche der gespeicherten Sequenzen der ersten Sequenz von Elementen am Ähnlichsten ist, und ein Signal ausgibt, das dieses anzeigt, wobei das Ausgabesignal mit dem Sequenz-Generator (301) zum Erzeugen von Sequenzen von Elementen verbunden ist und der Sequenz-Generator (301) ein Signal ausgibt, das eine zweite oder mehrere Sequenz(en) anzeigt.

11. Computerprogramm, das auf einem Computer-lesbaren Medium gespeichert ist und angeordnet ist, wenn es von einem Prozessor ausgeführt wird, die von dem Verfahren von Anspruch 10 definierten Schritte durchzuführen.

**Revendications**

1. Dispositif de réseau neuronal (201) comprenant :

   (i) un moyen d'identification (303) destiné à

   a) recevoir une première séquence ou plusieurs premières séquences d'éléments,
   b) accéder à des séquences mémorisées, et
   c) identifier la séquence parmi les séquences mémorisées à laquelle la ou chacune de la première séquence ou des plusieurs premières séquences reçues d'éléments ressemble le plus étroitement,

   lequel moyen d'identification peut être mis en oeuvre pour fournir en sortie, pour la ou chaque séquence reçue d'éléments, un signal d'identification indiquant la séquence mémorisée ainsi identifiée de manière correspondante, et **caractérisé en ce que** le dispositif comprend en outre

   (ii) un générateur de séquences (301) destiné à générer des séquences d'éléments pouvant être mis en oeuvre pour recevoir, en tant qu'entrée, un dit signal d'identification et pour engendrer une séquence d'éléments en réponse à celui-ci,

   le dispositif étant conçu de sorte que, lorsqu'une première séquence d'éléments est appliquée en entrée au moyen d'identification (303), le moyen d'identification identifie une séquence mémorisée que la première séquence d'éléments représente le plus fidèlement et fournit en sortie, au générateur de séquences, un signal indiquant celle-ci, et le générateur de séquences (ii) engendre alors une seconde séquence ou plusieurs secondes séquences d'éléments.

2. Dispositif selon la revendication 1, dans lequel le moyen d'identification (i) comprend une pluralité d'unités de classement, dont chaque unité de classement comprend :

   a) une pluralité (801) de premiers noeuds de classement (805),
   b) une pluralité (803) de seconds noeuds de classement,
   c) une pluralité de liens de classement, chaque lien de classement reliant l'un des premiers noeuds de classement à un second noeud de classement et comportant un poids de classement associé à celui-ci,

   chaque unité de classement pouvant être mise en oeuvre pour apprendre une ou plusieurs séquences d'éléments en modifiant les poids de classement sur des liens de classement.

3. Dispositif selon la revendication 1 ou la revendication 2, dans lequel le générateur de séquences destiné à engendrer des séquences d'éléments (ii) comprend une ou plusieurs unités de tâches (306), chaque unité de tâche comprenant un réseau neuronal supérieur et un réseau neuronal inférieur (503, 505) reliés selon une relation hiérarchique et qui sont reliées à chacune des autres unités de tâches au moyen de liaisons pondérées de générateur de séquences (713ab) entre elles.

4. Dispositif selon la revendication 3, dans lequel les réseaux neuronaux supérieur et inférieur, comprenant le générateur de séquences, comprennent chacun au moins une première couche de réseau interneuronal (400a) et une seconde couche de réseau intraneuronal (400b), laquelle seconde couche de réseau intraneuronal présente une rétroaction vers la première couche de réseau intraneuronal par l'intermédiaire d'une autre couche (400c), et dont chaque réseau neuronal peut être mis en oeuvre pour fournir un signal indiquant une séquence d'éléments.

5. Dispositif selon la revendication 4, dans lequel lesdites couches de réseaux intraneuronaux sont interconnectées par des liens de réseaux intraneuronaux et au moins certains des liens de réseaux intraneuronaux sont pondérés de manière variable, en procurant ainsi un moyen de modifier la séquence fournie en sortie par l'unité de tâche.

**6.** Dispositif selon l'une ou l'autre des revendications 4 ou 5, dans lequel les éléments comprenant la séquence sont mémorisés sous la forme d'un réseau d'éléments dans chaque réseau neuronal, lequel réseau définit l'ordre dans lequel les éléments sont fournis en sortie.

**7.** Dispositif selon la revendication 6, dans lequel chaque liaison pondérée de générateur de séquences (713ab) reliant mutuellement une unité de tâche à une autre unité de tâche comprend un lien de réseau interneuronal comportant deux extrémités, une première extrémité étant reliée à une seconde couche de réseau intraneuronal d'un réseau neuronal supérieur de première unité de tâche, et une seconde extrémité étant reliée à une seconde couche de réseau intraneuronal d'un réseau neuronal supérieur de seconde unité de tâche.

**8.** Dispositif selon l'une quelconque des revendications 2 à 7, comprenant en outre un moyen de connexion (305a, 305b) destiné à connecter le signal d'identification, indiquant la séquence mémorisée identifiée, au générateur de séquences (301), le moyen de connexion comprenant
une pluralité de liens de connexion, chaque lien de connexion présentant deux extrémités et un poids de connexion variable sur celui-ci,
où pour chaque lien de connexion, une première extrémité se connecte au noeud identifié parmi les seconds noeuds de classement et une seconde extrémité se connecte à une unité de tâche comprenant le générateur de séquences (301),
l'agencement étant tel que chaque unité de tâche se connecte seulement à une seconde extrémité.

**9.** Dispositif selon la revendication 8, dans lequel chaque seconde extrémité se connecte à la seconde couche de réseau intraneuronal (400b) d'un réseau neuronal supérieur (503) d'une unité de tâche (306).

**10.** Procédé de génération d'une seconde séquence ou de plusieurs secondes séquences d'éléments, après avoir traité une première séquence ou plusieurs premières séquences d'éléments, le procédé comprenant les étapes consistant à :

(i) appliquer en entrée une première séquence d'éléments à un moyen d'identification (303),
(ii) accéder à des séquences mémorisées,
(iii) identifier la séquence, parmi les séquences mémorisées, à laquelle la première séquence d'éléments ressemble le plus étroitement,
(iv) mettre en oeuvre le moyen d'identification de manière à engendrer un signal de sortie indiquant la séquence mémorisée ainsi identifiée de manière correspondante,
(v) connecter ledit signal de sortie à un générateur de séquences (301) destiné à engendrer des séquences d'éléments, et
(vi) mettre en oeuvre le générateur de séquences pour engendrer des séquences d'éléments, de sorte que, lorsque la première séquence d'éléments est appliquée en entrée au moyen d'identification (303), le moyen d'identification identifie la séquence, parmi les séquences mémorisées, à laquelle la première séquence d'éléments représente le plus fidèlement et fournit en sortie un signal indiquant celle-ci, le signal de sortie est connecté au générateur de séquences (301) destiné à engendrer des séquences d'éléments, et le générateur de séquences (301) fournit en sortie un signal indiquant une seconde séquence ou plusieurs secondes séquences.

**11.** Programme informatique mémorisé sur un support lisible par un ordinateur et qui est agencé, lorsqu'il est exécuté par un processeur, pour exécuter les étapes définies par le procédé selon la revendication 10.

EP 1 295 252 B1

**103** DISPLAY

**111** HARD DRIVE

**113** AUDIO INPUT

**115** I/O IF

**117**

**101** KEYBOARD

**105** MOUSE

**107** PROCESSOR

**109** RAM

Fig 1

Fig 2

Fig 3

WEIGHTED LINK

303
309
301
304a
307a,
307b
311a
305b
305a
306
304b
311b
201

EP 1 295 252 B1

Fig 4

FIXED EXCITATORY
WEIGHT

FIXED INHIBITORY
WEIGHT

VARIABLE EXCITATORY
WEIGHT

EP 1 295 252 B1

EP 1 295 252 B1

503

427a

306

505

411b

427b

Fig 5

Fig 6

Fig 7

Fig 8a

EP 1 295 252 B1

**805**

**801**

**803**

Fig 8b

EP 1 295 252 B1

**Input vectors to 304b:**

email, team meeting, appraisal

email, appraisal, team meeting,

appraisal, email, team meeting

appraisal, team meeting, email

team meeting, email, appraisal

team meeting, appraisal, email,

Fig 8c

Fig 9

S901 — Compare existing task unit outputs with "subsequent" tasks

S902 — Missing...

S911 — Task

S921 — Sub-task

S912 — Train one or more lower ACTION networks to provide sub-tasks

S923 — Identify which task unit is missing sub-task sequence

S913 — Train upper AN to provide missing task and sequence sub-tasks in required order

Can a combination of existing lower AN provide sub-task ?

S924

Y

N

S925 — Train lower AN to reproduce required sub-task sequence

S926 — Train fresh lower ANs to provide required sub-task sequence

```
                    ┌────────────────────┐
   S1001            │ Input sequence of  │
                    │ elements into SOM  │
                    └─────────┬──────────┘
                              │        ┌──────────────────┐
                              │        │ Identify which   │  S1001.1
                              └───────▶│ SOM correlates   │
                                       │ ·best with the tasks │
                                       └─────────┬────────┘
                                                 │
                                       ┌─────────▼────────┐
                                       │ Insert sequence into │
                                       │ identified SOM: find │
                                       │ winning node  ·  │
                                       └─────────┬────────┘
                                                          S1001.2
   S1002    ┌────────────────────┐               │
            │ Activate links from │◀─────────────┘
            │ winning node to STR │
            │ in all task units   │
            └─────────┬──────────┘
                      │
   S1003    ┌─────────▼──────────┐
            │ Activate all task units │
            └─────────┬──────────┘
                      │
                      ▼
                 Sequence
                 output                    Fig 10
```